# EUROPÄISCHE PATENTSCHRIFT

(11) **EP 2 754 775 B1**
(45) Veröffentlichungstag und Bekanntmachung des Hinweises auf die Patenterteilung: **21.11.2018**
(21) Anmeldenummer: 14150413.4
(22) Anmeldetag: 08.01.2014
(51) Int. Cl.: E04F 19/04, E04F 19/06, F21V 33/00, F21S 4/00, H02G 3/04, F21S 4/20, F21V 21/08, F21Y 103/10, F21Y 115/10, H02G 3/36

(54) **Beleuchtetes Profilsystem zur Verwendung bei Plattenverkleidungen**
Illuminated Profile System for use with cladding panels
Système de profilés illuminé pour application dans un revêtement de panneaux

(30) Priorität: 11.01.2013 DE 202013100142 U
(43) Veröffentlichungstag der Anmeldung: 16.07.2014
(73) Patentinhaber: Schlüter-Systems KG, 58640 Iserlohn (DE)
(72) Erfinder: Schlüter, Werner, 58644 Iserlohn (DE)
(74) Vertreter: Schröter & Albrecht

(56) Entgegenhaltungen:
- EP-A1- 1 414 125
- EP-A2- 2 224 562
- DE-A1- 2 109 614
- DE-U1- 20 106 923
- DE-U1-202010 007 926
- JP-U- 3 180 564
- US-A1- 2009 185 379
- US-A1- 2010 103 657

## Beschreibung

Die vorliegende Erfindung betrifft ein Profilsystem mit einem länglichen Profil zur Verwendung bei einen plattenbekleideten Untergrund aufweisenden Konstruktionen, wie beispielsweise eine geflieste Wand, ein gefliester Boden oder dergleichen.

Profile, die zur Verwendung bei Konstruktionen mit einem plattenbekleideten Untergrund ausgelegt sind, sind im Stand der Technik in unterschiedlichsten Ausgestaltungen bekannt. Ihre Form ist normalerweise an einen speziellen Verwendungszweck angepasst, wie beispielsweise zum Abschließen von Fliesenbelagsaußenkanten, zur Schaffung eines stufenlosen Übergangs von einem Fliesenbelag zu einem angrenzenden anderen Bodenbelag, beispielsweise in Form eines Teppichbodens, zur stufenlosen Verbindung verschieden hoher Bodenbeläge, zur Erzeugung einer dekorativen Fugengestaltung, zur Bereitstellung einer Zierleiste oder dergleichen.

Weitere Profile sind in den Druckschriften EP 1 414 125 A1, DE 21 09 614 A1, EP 2 224 562 A2, JP 3180564U, DE 201 06 923 U1, US 2010/103657 A1, US 2009/185379 A1 und DE 20 2010 007 926 U1 beschrieben.

Ausgehend von diesem Stand der Technik ist es eine Aufgabe der vorliegenden Erfindung, ein Profilsystem der eingangs genannten Art mit einem länglichen Profil zu schaffen, das derart ausgebildet ist, dass es in Verbindung mit weiteren Profilsystemkomponenten unterschiedlichste Aufgaben erfüllt und entsprechend universell einsetzbar ist.

Zur Lösung dieser Aufgabe schafft die vorliegende Erfindung ein Profilsystem der eingangs genannten Art, das wenigstens ein längliches Profil umfasst, das einen Basisschenkel, zwei von den freien Enden des Basisschenkels vorstehende, einander gegenüberliegend angeordnete Seitenschenkel gleicher Länge und zwei Abschlussschenkel aufweist, die von den freien Enden der Seitenschenkel vorstehen, zueinander weisen und miteinander fluchten, wobei die Seitenschenkel im Abstand zueinander angeordnet sind und der Abstand mindestens 10 mm beträgt. Ein derartiges Profil bildet die Basiskomponente des erfindungsgemäßen Profilsystems und kann in Verbindung mit weiteren erfindungsgemäßen Profilsystemkomponenten unterschiedlichste Aufgaben erfüllen, weshalb das erfindungsgemäße Profilsystem sehr universell einsetzbar ist. Erfindungsgemäß weist das Profilsystem zumindest ein in dem Profil befestigbares Leuchtmittel und zumindest eine längliche Streuscheibenabdeckung auf, die zwischen den Abschlussschenkeln des Profils lösbar befestigt ist, wobei das Leuchtmittel über einen Klebestreifen an der Innenseite des oberen Seitenschenkels des Profils aufgenommen ist. Entsprechend kann das Profilsystem als Beleuchtungssystem eingesetzt werden.

Bei dem Profil handelt es sich bevorzugt um ein Strangprofil mit über die gesamte Länge gleich bleibendem Querschnitt. Strangprofile sind dahingehend von Vorteil, dass sie einfach und preiswert herstellbar sind.

Das Profil ist vorzugsweise aus Aluminium oder Edelstahl hergestellt. Aluminium und Edelstahl weisen zum einen ein sehr ansprechendes Erscheinungsbild auf. Zum anderen sind diese Materialien korrosionsbeständig, was den Einsatz des erfindungsgemäßen Profilsystems auch in Nassräumen und in Außenbereichen ermöglicht.

Bevorzugt schließt sich an die Abschlussschenkel jeweils ein Endabschnitt an, wobei die Endabschnitte in Richtung des Basisschenkels einwärts geneigt sind. Derart ausgebildete Endabschnitte dienen in erster Linie dazu, das Profil mit weiteren Profilsystemkomponenten rastend zu verbinden, wie es nachfolgend noch näher erläutert ist.

Gemäß einer Ausgestaltung der vorliegenden Erfindung weist das Profilsystem zumindest ein Gewebe oder Vlies auf, das an der Außenseite und/oder an der Innenseite des Basisschenkels befestigt oder befestigbar ist und insbesondere streifenförmig ausgebildet ist. Ein solches Gewebe oder Vlies dient zur Bildung eines Haftgrunds für einen Kleber, um das Profil mit einem Untergrund oder mit einer weiteren Profilsystemkomponente klebend zu verbinden.

Gemäß einer weiteren Ausgestaltung der vorliegenden Erfindung weist das Profilsystem zumindest eine Halteleiste auf, die an einem Untergrund befestigbar und zur lösbaren Aufnahme des Profils ausgebildet ist.

Die Halteleiste ist bevorzugt aus Kunststoff hergestellt, insbesondere als einteilig ausgebildetes Strangprofil. Kunststoff weist den Vorteil auf, dass es preisgünstig ist. Darüber hinaus ist eine zumindest teilweise flexible Ausbildung der Halteleiste möglich, was insbesondere zur Erzeugung einer leicht handhabbaren Rastverbindung von Vorteil ist.

An der Rückseite der Halteleiste ist bevorzugt ein Klebestreifen, ein einen Haftgrund für einen Kleber erzeugendes Vlies oder ein Gewebe angeordnet, um die Halteleiste selbstklebend oder unter Verwendung eines Klebstoffes an einem Untergrund zu fixieren.

Gemäß einer Ausgestaltung der vorliegenden Erfindung stehen von der Vorderseite der Halteleiste Befestigungsvorsprünge vor, die derart ausgebildet sind, dass sie im bestimmungsgemäßen Zustand unter Erzeugung einer manuell lösbaren Rastverbindung hinter die Abschlussschenkel und/oder hinter die Endabschnitte des Profils greifen. Entsprechend kann das Profil in einfacher Art und Weise auf die Befestigungsvorsprünge der Halteleiste geclipst werden.

Vorteilhaft ist an der Vorderseite der Halteleiste ein Kabelkanal ausgebildet, der im bestimmungsgemäß angeordneten Zustand durch das Profil verdeckt wird. Entsprechend dient das Halteprofil nicht nur zum Befestigen des Profils an einem Untergrund sondern kann darüber hinaus auch zur Aufnahme von Kabeln oder dergleichen eingesetzt werden.

Bevorzugt ist ein Deckelelement zum Verschließen des Kabelkanals vorgesehen, das insbesondere einteilig mit der Halteleiste ausgebildet ist. Entsprechend können in dem Kabelkanal verstaute Kabel bei geschlossenem Deckelelement nicht aus dem Kabelkanal rutschen.

Die Streuscheibenabdeckung weist an ihrer Innenseite bevorzugt Haltevorsprünge auf, die derart ausgebildet sind, dass sie im bestimmungsgemäß angeordneten Zustand unter Erzeugung einer manuell lösbaren Rastverbindung hinter die Abschlussschenkel und/oder hinter die Endabschnitte des Profils greifen. Dank dieser Ausbildung kann die Streuscheibenabdeckung einfach auf das Profil aufgeclipst werden.

Das Leuchtmittel ist bevorzugt länglich ausgebildet, insbesondere in Form eines Streifens oder einer Kette mit einer Vielzahl von daran angeordneten LEDs.

Gemäß einer weiteren Ausgestaltung der vorliegenden Erfindung weist das Profilsystem zumindest eine Endkappe zum Verschließen einer Stirnseite des Profils auf. Eine solche Endkappe kommt dann zum Einsatz, wenn eine Stirnseite des Profils derart angeordnet ist, dass sie für einen Betrachter von der Seite betrachtet werden kann. Gemäß noch einer weiteren Ausgestaltung der vorliegenden Erfindung weist das Profilsystem ein längliches Dichtlippenelement auf, das derart ausgebildet ist, dass es im bestimmungsgemäß angeordneten Zustand in einer Fuge zwischen dem Profil und einem seitlich an das Profil angrenzenden Plattenbelag zur Abdichtung der Fuge angeordnet werden kann. Ein solches Dichtlippenelement ist dann von Vorteil, wenn das erfindungsgemäße Profilsystem zur Ausbildung einer Inneneckenanordnung eingesetzt wird.

Die Dichtlippe weist bevorzugt zumindest einseitig einen Klebestreifen zur Festlegung der Dichtlippe auf. Entsprechend ist die Dichtlippe problemlos montierbar.

Weitere Merkmale und Vorteile der vorliegenden Erfindung einschließlich beispielhafter Verwendungsmöglichkeiten werden anhand der nachfolgenden Beschreibung eines Profilsystem gemäß einer Ausgestaltung der vorliegenden Erfindung unter Bezugnahme auf die beiliegende Zeichnung deutlich. Darin ist
- Figur 1: eine perspektivische Ansicht, die einzelne Komponenten eines Profilsystems gemäß einer Ausführungsform der vorliegenden Erfindung zeigt, wobei die Komponenten für unterschiedliche Verwendungszwecke gezielt miteinander kombiniert werden können;
- Figur 2: eine perspektivische Ansicht, die in Figur 1 dargestellte Einzelkomponenten zeigt, die für einen ersten Verwendungszweck miteinander kombiniert sind;
- Figur 3: eine schematische Seitenansicht, welche die in Figur 2 dargestellten Einzelkomponenten im montierten Zustand zeigt;
- Figur 4: eine perspektivische Ansicht, welche in Figur 1 dargestellte Einzelkomponenten zeigt, die für einen zweiten Verwendungszweck miteinander kombiniert sind;
- Figur 5: eine Seitenansicht, welche die in Figur 4 dargestellten Einzelkomponenten im montierten Zustand zeigt;
- Figur 6: eine perspektivische Ansicht, welche in Figur 1 dargestellten Einzelkomponenten zeigt, die für einen dritten Verwendungszweck miteinander kombiniert sind;
- Figur 7: eine schematische Seitenansicht, welche die in Figur 6 dargestellten Komponenten im montierten Zustand zeigt;
- Figur 8: eine perspektivische Ansicht, welche in Figur 1 dargestellten Einzelkomponenten zeigt, die für einen vierten Verwendungszweck miteinander kombiniert sind;
- Figur 9: eine schematische Seitenansicht der in Figur 8 dargestellten Einzelkomponenten im montierten Zustand; und
- Figur 10: eine schematische Seitenansicht, welche die in Figur 8 dargestellten Einzelkomponenten und eine weitere der in Figur 1 dargestellten Komponenten im montierten Zustand zeigt.

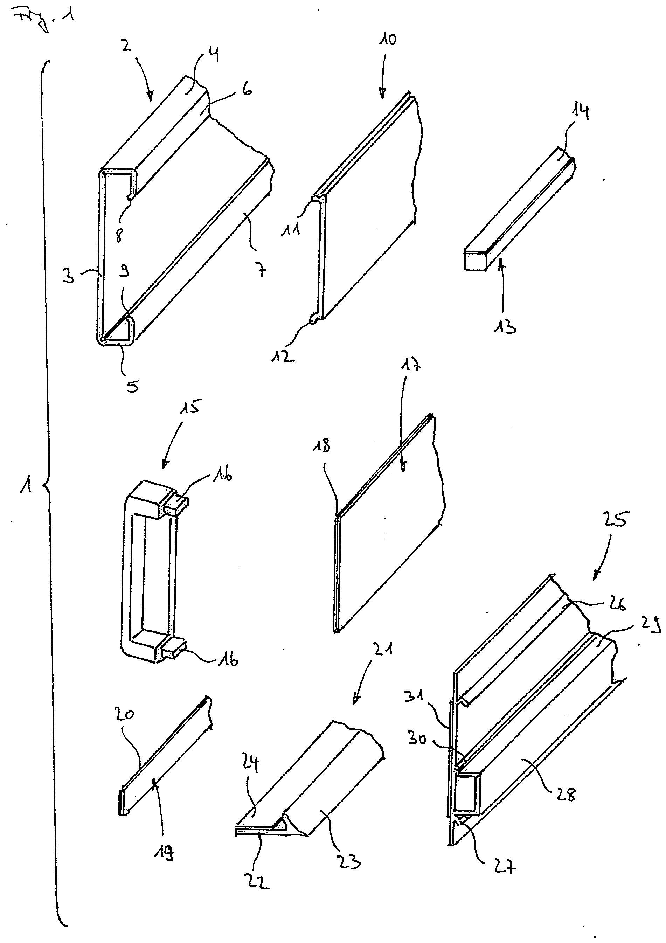

Figur 1 zeigt verschiedene Einzelkomponenten, die Teil eines Profilsystems 1 gemäß einer Ausführungsform der vorliegenden Erfindung sind oder sein können.

Das Profilsystem 1 umfasst als eine erste Komponente ein längliches Profil 2, das einteilig als Strangprofil mit über die gesamte Länge gleich bleibenden Querschnitt ausgebildet und aus Aluminium oder Edelstahl hergestellt ist. Das Profil 2 umfasst einen Basisschenkel 3, zwei von den freien Enden des Basisschenkels 3 vorstehende, einander gegenüberliegend angeordnete Seitenschenkel 4 und 5 gleicher Länge, zwei Abschlussschenkel 6 und 7, die von den freien Enden der Seitenschenkel 4, 5 vorstehen und miteinander fluchten, und zwei Endabschnitte 8 und 9, die sich an die jeweiligen Abschlussschenkel 6, 7 anschließen, wobei die Endabschnitte 8, 9 in Richtung des Basisschenkels 3 einwärts geneigt sind. Die Seitenschenkel 4, 5 sind im Abstand zueinander angeordnet, wobei der Abstand mindestens 10 mm beträgt.

Als zweite Komponente umfasst das Profilsystem 1 eine längliche Streuscheibenabdeckung 10, die einteilig aus lichtdurchlässigem Kunststoff hergestellt ist. Die Streuscheibenabdeckung 10 weist an ihrer Innenseite längliche Haltevorsprünge 11 und 12 auf, die derart ausgebildet sind, dass sie im bestimmungsgemäß angeordneten Zustand unter Erzeugung einer manuell lösbaren Rastverbindung hinter die Endabschnitte 8 und 9 des Profils 2 greifen. Entsprechend lässt sich die Streuscheibenabdeckung 10 einfach auf das Profil 2 aufclipsen.

Das Profilsystem 1 umfasst ferner ein Leuchtmittel 13 in Form eines Streifens mit einer Vielzahl von daran angeordneten LEDs. An der Oberseite des Leuchtmittels 13 ist ein Klebestreifen 14 vorgesehen, mit dessen Hilfe das Leuchtmittel 13 an einem Untergrund befestigt werden kann. Der Klebestreifen 14 ist vorliegend derart angeordnet, dass die Lichtaustrittsöffnungen des Leuchtmittels 13 an der dem Klebestreifen 14 gegenüberliegenden Seite angeordnet sind.

Als vierte Komponente umfasst das Profilsystem 1 zumindest eine Endkappe 15, die zum Verschließen einer Stirnseite des Profils 2 dient. Die Endkappe 15 weist zwei Klemmvorsprünge 16 auf, die derart ausgebildet und angeordnet sind, dass sie stirnseitig in das Profil 2 eingeführt werden können und dann zwischen der Innenseite des Basisschenkels 3 und den Innenseiten der Abschlussschenkel 6 und 7 klemmend gehalten sind.

Als fünfte Komponente umfasst das Profilsystem 1 ein streifenförmiges Gewebe oder Vlies 17, das rückseitig mit einer selbstklebenden Fläche 18 versehen ist, die gegebenenfalls mit einem abziehbaren Schutzstreifen abgedeckt sein kann, der vorliegend nicht näher dargestellt ist. Das Gewebe oder Vlies 17 ist derart ausgebildet, dass es einen Haftgrund für einen pastösen Kleber bildet, wie beispielsweise für einen Fliesenkleber oder dergleichen.

Die sechste Komponente des Profilsystems 1 bildet ebenfalls ein streifenförmiges Gewebe oder Vlies 19 mit an seiner Rückseite angeordneter selbstklebender Fläche 20, wobei die Breite des Gewebes oder Vlieses 19 an die Breite der Abschlussschenkel 6, 7 des Profils 2 angepasst ist.

Eine siebte Komponente des Profilsystems 1 bildet ein längliches Dichtlippenelement 21, das derart ausgebildet ist, dass es im bestimmungsgemäß angeordneten Zustand in einer Fuge zwischen dem Profil 2 und einem seitlich an das Profil 2 angrenzenden Plattenbelag zur Abdichtung der Fuge angeordnet werden kann. Das Dichtlippenelement 21 umfasst eine am Ende eines Steges 22 angeordnete Dichtlippe 23, wobei an der Oberseite des Steges 22 ein Klebestreifen 24 befestigt ist, der zur Befestigung des Dichtlippenelementes 21 an einem Seitenschenkel 5 des Profils 2 dient.

Die letzte Komponente des in Figur 1 dargestellten Profilsystems 1 ist eine längliche, aus Kunststoff hergestellte Halteleiste 25, von deren Vorderseite Befestigungsvorsprünge 26 und 27 vorstehen, die derart ausgebildet sind, dass sie im bestimmungsgemäßen Zustand unter Erzeugung einer manuell lösbaren Rastverbindung hinter die Endabschnitte 8 und 9 des Profils 2 greifen. Entsprechend kann das Profil 2 einfach auf die Befestigungsvorsprünge 26 und 27 der Halteleiste 25 aufgeclipst werden. An der Vorderseite der Halteleiste 25 ist ein Kabelkanal 28 ausgebildet, der zur Aufnahme von Kabeln dient. Der Kabelkanal 28 umfasst ein einteilig mit der Halteleiste 25 ausgebildetes flexibles Deckelelement 29, das zum Schließen des Kabelkanals 28 hinter einem länglichen, ebenfalls einteilig mit der Halteleiste 25 ausgebildeten Haltevorsprung 30 verrastet werden kann. An der Rückseite der Halteleiste 25 ist ein streifenförmiges Vlies oder Gewebe 31 vorgesehen, das als Haftgrund für einen pastösen Kleber dient, wie beispielsweise für einen Fliesenkleber. Entsprechend kann die Halteleiste 25 unter Verwendung eines entsprechenden Klebers rückseitig an einem Untergrund festgelegt werden.

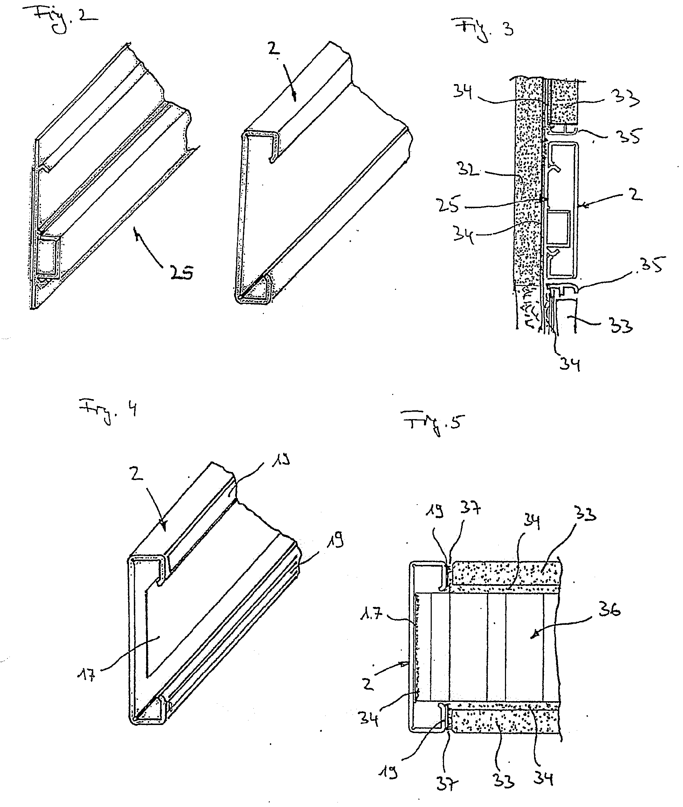

Die Figuren 2 bis 10 zeigen unterschiedliche Kombinationsmöglichkeiten der in Figur 1 dargestellten Einzelkomponenten des erfindungsgemäßen Profilsystems 1 sowie Verwendungsbeispielweise, die mit den jeweiligen Kombinationen der Systemkomponenten realisierbar sind.

Figur 2 zeigt eine Kombination des Profils 2 und der Halteleiste 25 des in Figur 1 dargestellten Profilsystems 1, und Figur 3 zeigt ein Verwendungsbeispiel der in Figur 2 dargestellten Kombination, bei dem das Profil 2 als Zierleiste mit dahinter angeordnetem Kabelkanal eingesetzt wird. Zur Herstellung der in Figur 3 dargestellten Anordnung wird an einem Untergrund 32 zunächst eine untere Reihe von Fliesen 33 unter Verwendung eines Fliesenklebers 34 befestigt, wobei randseitig zum Schutz der Fliesenkanten ein Randbegrenzungsprofil 35 angeordnet wird. Derartige Randbegrenzungsprofile 35 sind im Stand der Technik grundsätzlich bekannt, weshalb auf eine nähere Erläuterung an dieser Stelle verzichtet wird. Oberhalb des Randbegrenzungsprofils 35 wird in einem weiteren Schritt die Halteleiste 25 am Untergrund 32 befestigt, indem das rückseitig an der Halteleiste 25 angeordnete Vlies oder Gewebe 31 unter Verwendung von Fliesenkleber 34 an den Untergrund 32 geklebt wird. Daraufhin wird oberhalb der Halteleiste 25 eine weitere Reihe von Fliesen 33 geklebt, die randseitig ebenfalls durch ein Randbegrenzungsprofil 35 geschützt werden. In einem letzten Schritt wird das Profil 2 derart auf die Halteleiste 25 geclipst, dass die Endabschnitte 8, 9 des Profils 2 rastend hinter die Befestigungsvorsprünge 26, 27 der Halteleiste 25 greifen. Die Außenseite des Basisschenkels 3 des Profils 2 dient nunmehr als Zierfläche, hinter welcher der Kabelkanal 28 der Halteleiste 25 verborgen ist.

Figur 4 zeigt eine Kombination, die aus dem Profil 2 und dem streifenförmigen Gewebe oder Vlies 19 besteht. Bei dieser Kombination ist das Gewebe oder Vlies 19 mit seiner selbstklebenden Fläche 20 an die Innenseite des Basisschenkels 3 geklebt. Ferner ist jeweils ein streifenförmiges Vlies oder Gewebe 19 mit seiner selbstklebenden Fläche 20 auf die Außenseite eines jeden Abschlussschenkels 6, 7 geklebt.

Figur 5 zeigt ein Verwendungsbeispiel der in Figur 4 dargestellten Kombination, bei dem diese als Kantenschutz oder Verblendung der Seitenkante einer mit Fliesen bekleideten Bauplatte eingesetzt wird. Zur Herstellung der in Figur 5 dargestellten Anordnung wird das Profil 2 in einem ersten Schritt an einer zu verkleidenden Stirnseite einer Bauplatte 36 befestigt. Hierzu wird das an der Innenseite des Basisschenkels 3 angeordnete Gewebe oder Vlies 17 unter Verwendung eines Fliesenklebers 34 mit der Stirnseite der Bauplatte 36 verklebt. In einem weiteren Schritt werden angrenzend zu den Abschlussschenkeln 6, 7 des Profils 2 unter Belassung entsprechender Fugen 37 Fliesen 33 mittels Fliesenkleber 34 auf die Hauptflächen der Bauplatte 36 geklebt, wobei der Fliesenkleber 34 auch an dem jeweils an den Abschlussschenkeln 6 und 7 des Profils 2 angeordneten Vlies oder Gewebe 19 anhaftet, wodurch eine weitere Fixierung des Profils 2 erfolgt.

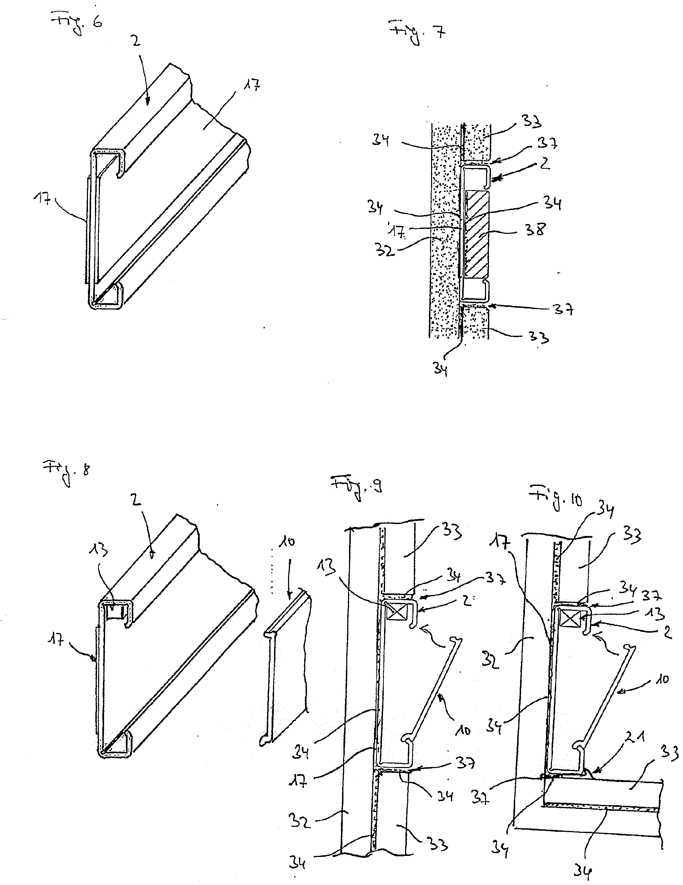

Figur 6 zeigt eine weitere Kombinationsvariante, bei der sowohl die Außenseite als auch die Innenseite des Basisschenkels 3 des Profils 2 mit einem streifenförmigen Gewebe oder Vlies 17 versehen sind.

Figur 7 zeigt ein Verwendungsbeispiel der in Figur 6 dargestellten Kombinationsvariante, bei der das Profilsystem 1 als Zierleiste verwendet wird. Zur Herstellung der in Figur 7 dargestellten Anordnung wird auf einen Untergrund 32 zunächst eine untere Reihe von Fliesen 33 unter Verwendung von Fliesenkleber 34 geklebt. Anschließend wird oberhalb der Fliesenreihe unter Belassung einer Fuge 37 das Profil 2 am Untergrund befestigt, indem das an der Außenseite des Basisschenkels 3 angeordnete Gewebe oder Vlies 17 unter Verwendung von Fliesenkleber mit dem Untergrund 32 verklebt wird. Daraufhin wird ebenfalls unter Belassung einer Fuge 37 eine weitere Reihe von Fliesen 33 mittels Fliesenkleber oberhalb des Profils 2 am Untergrund 32 festgelegt. In einem letzten Schritt werden Zierfliesen 38 unter Verwendung von Fliesenkleber 34 auf das an der Innenseite des Basisschenkels 3 vorgesehene Gewebe oder Vliese 17 geklebt, wobei die Höhe der Zierfliesen 38 derart gewählt ist, dass sie im Wesentlichen der Höhe der Seitenschenkel 4, 5 des Profils 2 entspricht, so dass die Oberfläche der Zierfliesen 38 im Wesentlichen bündig mit der Oberfläche der Abschlussschenkel 6 und 7 des Profils 2 abschließen.

Figur 8 zeigt eine weitere mögliche Kombination der in Figur 1 dargestellten Komponenten des erfindungsgemäßen Profilsystems 1 umfassend das Profil 2, das Leuchtmittel 13, das streifenförmige Vlies oder Gewebe 17 und die Streuscheibenabdeckung 10, wobei das Vlies oder Gewebe 17 an der Außenseite des Basisschenkels 3 des Profils 2 befestigt und das Leuchtmittel 13 über den Klebestreifen 14 an der Innenseite des oberen Seitenschenkels 4 des Profils 2 aufgenommen ist.

Figur 9 zeigt eine montierte Anordnung der in Figur 8 dargestellten Komponenten. Zur Herstellung dieser Anordnung wird in einem ersten Schritt eine erste Reihe von unteren Fliesen 33 mittels Fliesenkleber 34 an einem Untergrund 32 befestigt. Daraufhin wird das Profil 2 über das Vlies oder Gewebe 17 mittels Fliesenkleber 34 am Untergrund 32 derart festgelegt, dass der untere Seitenschenkel 5 des Profils 2 unter Bildung einer Fuge 37 benachbart zu den Fliesen 33 angeordnet ist und deren Kanten schützend abschließt. In einem weiteren Schritt wird eine obere Reihe von Fliesen 33 unter Bildung einer Fuge 37 benachbart zum oberen Seitenschenkel 5 des Profils 2 mittels Fliesenkleber 34 am Untergrund 32 festgelegt. Abschließend wird die Streuscheibenabdeckung 10 in das Profil 2 eingeclipst. Durch die so erzeugte Anordnung wird eine beleuchtete Zierleiste zwischen den Fliesenreihen vorgesehen.

Die in Figur 10 dargestellte Anordnung entspricht im Wesentlichen der Anordnung gemäß Figur 9, wobei die untere Reihe von Fliesen 33 jedoch waagerecht angeordnet und zwischen der unteren Reihe von Fliesen 33 und dem unteren Seitenschenkel 5 des Profils 2 das in Figur 1 dargestellte Dichtlippenelemente 21 vorgesehen ist, das über den an seiner Oberseite vorgesehenen Klebestreifen 24 mit dem unteren Seitenschenkel 5 des Profils 2 verklebt ist. Das Dichtlippenelement 21 sorgt dafür, dass zwischen dem Profil 2 und der unteren waagerecht angeordneten Reihe von Fliesen 33 keine Feuchtigkeit eindringen kann.

Das erfindungsgemäße Profilsystem 1 zeichnet sich insbesondere durch seine sehr variable Anwendbarkeit aus. Es sollte klar sein, dass die in den Figuren dargestellten Verwendungsmöglichkeiten nur als Beispiel dienen und nicht einschränkend sind. Vielmehr lassen sich die in Figur 1 dargestellten Komponenten des erfindungsgemäßen Profilsystems 1 auch in anderer Art und Weise miteinander kombinieren und verwenden.

## Patentansprüche

1. Profilsystem (1) zur Verwendung bei einen plattenbekleideten Untergrund ausweisenden Konstruktionen, das wenigstens ein längliches Profil (2), das einen Basisschenkel (3), zwei von den freien Enden des Basisschenkels (3) vorstehende, einander gegenüberliegend angeordneten Seitenschenkel (4, 5) gleicher Länge, und zwei Abschlussschenkel (6, 7) aufweist, die von den freien Enden der Seitenschenkel (4, 5) vorstehen, zueinander weisen und miteinander fluchten, wobei die Seitenschenkel (4, 5) im Abstand zueinander angeordnet sind und der Abstand mindestens 10 mm beträgt, wobei das Profilsystem (1) zumindest ein in dem Profil (2) befestigtes Leuchtmittel (13) und zumindest eine längliche Streuscheibenabdeckung (10) aufweist, die zwischen den Abschlussschenkeln (6, 7) des Profils (2) lösbar befestigt ist, **dadurch gekennzeichnet, dass** das Leuchtmittel (13) über einen Klebestreifen (14) an der Innenseite des oberen Seitenschenkels (4) des Profils (2) aufgenommen ist.

2. Profilsystem (1) nach Anspruch 1, **dadurch gekennzeichnet, dass** das Profil (2) ein Strangprofil mit über die gesamte Länge gleich bleibendem Querschnitt ist.

3. Profilsystem (1) nach einem der vorhergehenden Ansprüche, **dadurch gekennzeichnet, dass** das Profil (2) aus Aluminium oder Edelstahl hergestellt ist.

4. Profilsystem (1) nach einem der vorhergehenden Ansprüche, **dadurch gekennzeichnet, dass** sich an die Abschlussschenkel (6, 7) des Profils (2) jeweils ein Endabschnitt (8, 9) anschließt, wobei die Endabschnitte (8, 9) in Richtung des Basisschenkels (3) einwärts geneigt sind.

5. Profilsystem (1) nach einem der vorhergehenden Ansprüche, **dadurch gekennzeichnet, dass** dieses zumindest ein Gewebe oder Vlies (17) aufweist, das an der Außenseite und/oder an der Innenseite des Basisschenkels (3) des Profils (2) befestigt oder befestigbar ist.

6. Profilsystem (1) nach einem der vorhergehenden Ansprüche, **dadurch gekennzeichnet, dass** dieses zumindest eine Halteleiste (25) aufweist, die an einem Untergrund befestigbar und zur lösbaren Aufnahme des Profils (2) ausgebildet ist, wobei die Halteleiste (25) insbesondere aus Kunststoff hergestellt ist.

7. Profilsystem (1) nach Anspruch 6, **dadurch gekennzeichnet, dass** an der Rückseite der Halteleiste (25) ein Klebestreifen oder ein Vlies oder ein Gewebe (31) angeordnet ist.

8. Profilsystem (1) nach einem der Ansprüche 6 oder 7, **dadurch gekennzeichnet, dass** von der Vorderseite der Halteleiste (25) Befestigungsvorsprünge (26, 27) vorstehen, die derart ausgebildet sind, dass sie im bestimmungsgemäßen Zustand unter Erzeugung einer manuell lösbaren Rastverbindung hinter die Abschlussschenkel (6, 7) und/oder hinter die Endabschnitte (8, 9) des Profils (2) greifen.

9. Profilsystem (1) nach einem der Ansprüche 6 bis 8, **dadurch gekennzeichnet, dass** an der Vorderseite der Halteleiste (25) ein Kabelkanal (28) ausgebildet ist, wobei insbesondere ein Deckelelement (29) zum Verschließen des Kabelkanals (28) vorgesehen ist, das insbesondere einteilig mit der Halteleiste (25) ausgebildet ist.

10. Profilsystem (1) nach einem der vorhergehenden Ansprüche, **dadurch gekennzeichnet, dass** die Streuscheibenabdeckung (10) an ihrer Innenseite Haltevorsprünge (11, 12) aufweist, die derart ausgebildet sind, dass sie im bestimmungsgemäß angeordneten Zustand unter Erzeugung einer manuell lösbaren Rastverbindung hinter die Abschlussschenkel (6, 7) und/oder hinter die Endabschnitte (8, 9) des Profils (2) greifen.

11. Profilsystem (1) nach einem der vorhergehenden Ansprüche, **dadurch gekennzeichnet, dass** das Leuchtmittel (13) länglich ausgebildet ist, insbesondere in Form eines Streifens oder einer Kette mit einer Vielzahl von daran angeordneten LEDs.

12. Profilsystem (1) nach einem der vorhergehenden Ansprüche, **dadurch gekennzeichnet, dass** dieses zumindest eine Endkappe (15) zum Verschließen einer Stirnseite des Profils (2) aufweist.

13. Profilsystem (1) nach einem der vorhergehenden Ansprüche, **dadurch gekennzeichnet, dass** dieses ein längliches Dichtlippenelement (21) aufweist, das derart ausgebildet ist, dass es im bestimmungsgemäß angeordneten Zustand in einer Fuge zwischen dem Profil (2) und einem seitlich an das Profil (2) angrenzenden Plattenbelag zur Abdichtung der Fuge angeordnet werden kann, wobei das Dichtlippenelement (21) insbesondere zumindest einseitig einen Klebestreifen (24) zur Festlegung des Dichtlippenelementes (21) an einem Untergrund aufweist.

## Claims

1. A profile system (1) for use in constructions having a tile-clad substructure comprising at least one elongated profile (2) comprising a base leg (3), two side legs (4, 5) of the same length facing each other and projecting from the free ends of the base leg (3), and two end legs (6, 7), facing each other, projecting from the free ends of the side legs (4, 5) and aligned with each other, wherein the side legs (4, 5) are spaced from each other and the distance is at least 10 mm, wherein the profile system (1) comprises at least one illuminant (13) fixed in the profile (2) and at least one elongated diffusion disc cover (10) which is detachably fixed between the end legs (6, 7) of the profile (2), **characterised in that** the illuminant (13) is received via an adhesive strip (14) on the inside of the upper side leg (4) of the profile (2).

2. The profile system (1) according to claim 1, **characterised in that** the profile (2) is an extruded profile having a constant cross-section over its entire length.

3. The profile system (1) according to one of the preceding claims, **characterised in that** the profile (2) is made of aluminium or stainless steel.

4. The profile system (1) according to one of the preceding claims, **characterised in that** an end section (8, 9) respectively adjoins the end legs (6, 7) of the profile (2), wherein the end sections (8, 9) are inclined inwards towards the base leg (3).

5. The profile system (1) according to one of the preceding claims, **characterised in that** it comprises at least one fabric or fleece (17) attached or attachable to at least one of the outside and the inside of the base leg (3) of the profile (2).

6. The profile system (1) according to one of the preceding claims, **characterised in that** it comprises at least one retaining bar (25) attachable to a substructure and adapted for releasably receiving the profile (2), in particular wherein the retaining bar (25) is made from plastic.

7. The profile system (1) according to claim 6, **characterised in that** an adhesive strip or a fleece or a fabric (31) is arranged on the back of the retaining bar (25).

8. The profile system (1) according to one of claims 6 or 7, **characterised by** fastening protrusions (26, 27) projecting from the front side of the retaining bar (25), which are adapted such that, in the intended state, they engage behind at least one of the end legs (6, 7) and the end sections (8, 9) of the profile (2) so as to produce a manually releasable snap-on connection.

9. The profile system (1) according to one of claims 6 to 8, **characterised in that** a cable duct (28) is formed on the front side of the retaining bar (25), in particular wherein a cover element (29) is provided for closing the cable duct (28) in particular being made integrally with the retaining bar (25).

10. The profile system (1) according to one of the preceding claims, **characterised in that** the diffusion disc cover (10) has retaining protrusions (11, 12) on its inside which are made such that, in the correctly arranged state, they engage behind at least one of the end legs (6, 7) and the end sections (8, 9) of the profile (2) so as to produce a manually releasable snap-on connection

11. The profile system (1) according to one of the preceding claims, **characterised in that** the illuminant (13) has an elongated form, in particular the form of a strip or a chain with a plurality of LEDs arranged thereon.

12. The profile system (1) according to one of the preceding claims, **characterised in that** it comprises at least one end cap (15) for closing a front side of the profile (2).

13. The profile system (1) according to one of the preceding claims, **characterised in that** it comprises an elongated sealing lip element (21) which is adapted such that, in the correctly arranged state, it can be disposed in a gap between the profile (2) and a tile covering adjacent to the profile (2) in order to seal the gap, in particular wherein the sealing lip element (21) has an adhesive strip (24) on at least one side for securing the sealing lip element (21) on a substructure.

## Revendications

1. Système de profilés (1) pour application dans des constructions présentant une sous-couche revêtue de panneaux, qui présent au moins un profilé (2) allongé, qui présente une poignée de base (3), deux poignées latérales (4, 5) de même longueur dépassant des extrémités libres de la poignée de base (3) et disposées l'une en face de l'autre, et deux poignées terminales (6, 7), qui dépassent des extrémités libres des poignées latérales (4, 5), sont orientées l'une vers l'autre et alignées l'une avec l'autre, les poignées latérales (4, 5) étant disposées à une distance l'une de l'autre et la distance étant d'au moins 10 mm, le système de profilé (1) présentant au moins un moyen d'éclairage (13) fixé dans le profilé (2) et au moins un recouvrement diffuseur (10) allongé, qui est fixé de manière amovible entre les poignées terminales (6, 7) du profilé (2), **caractérisé en ce que** le moyen d'éclairage (13) est reçu par le biais d'une bande adhésive (14) sur la face intérieure de la poignée latérale (4) supérieure du profilé (2).

2. Système de profilés (1) selon la revendication 1, **caractérisé en ce que** le profilé (2) est un profilé extrudé avec une section transversale qui reste constante sur toute la longueur.

3. Système de profilés (1) selon l'une des revendications précédentes, **caractérisé en ce que** le profilé (2) est fabriqué en aluminium ou en acier inoxydable.

4. Système de profilés (1) selon l'une des revendications précédentes, **caractérisé en ce qu'**une portion d'extrémité (8, 9) est respectivement contiguë aux poignées terminales (6, 7) du profilé (2), les portions d'extrémité (8, 9) étant inclinées vers l'intérieur en direction de la poignée de base (3).

5. Système de profilés (1) selon l'une des revendications précédentes, **caractérisé en ce que** celui-ci présente au moins un tissu ou un textile non-tissé (17), qui est ou peut être fixé sur la face extérieure et/ou sur la face intérieure de la poignée de base (3) du profilé (2).

6. Système de profilés (1) selon l'une des revendications précédentes, **caractérisé en ce que** celui-ci présente au moins une baguette de maintien (25), qui peut être fixée sur une sous-couche et qui est conçue pour recevoir le profilé (2) de manière amovible, la baguette de maintien (25) étant en particulier fabriquée en matière plastique.

7. Système de profilés (1) selon la revendication 6, **caractérisé en ce qu'**une bande adhésive ou un textile non-tissé ou un tissu (31) est disposé(e) sur la face arrière de la baguette de maintien (25).

8. Système de profilés (1) selon l'une des revendications 6 ou 7, **caractérisé en ce que** des saillies de fixation (26, 27) font saillie de la face avant de la baguette de maintien (25), lesdites saillies de fixation étant réalisées de telle manière que, dans l'état conforme à l'utilisation prévue, elles viennent en prise derrière les poignées terminales (6, 7) et/ou derrière les portions d'extrémité (8, 9) du profilé (2) en créant une liaison par encliquetage libérable manuellement.

9. Système de profilés (1) selon l'une des revendications 6 à 8, **caractérisé en ce qu'**un conduit de câbles (28) est réalisé sur la face avant de la baguette de maintien (25), un élément de couvercle (29) étant en particulier prévu pour fermer le conduit de câbles (28) et en particulier réalisé d'un seul tenant avec la baguette de maintien (25).

10. Système de profilés (1) selon l'une des revendications précédentes, **caractérisé en ce que** le recouvrement diffuseur (10) présente sur sa face intérieure des saillies de maintien (11, 12) qui sont réalisées de telle manière que, dans l'état disposé conformément à l'utilisation prévue, elles viennent en prise derrière les poignées terminales (6, 7) et/ou derrière les portions d'extrémité (8, 9) du profilé (2) en créant une liaison par encliquetage libérable manuellement.

11. Système de profilés (1) selon l'une des revendications précédentes, **caractérisé en ce que** le moyen d'éclairage (13) est réalisé allongé, en particulier sous la forme d'une bande ou d'une chaîne avec une pluralité de LED disposées sur celle-ci.

12. Système de profilés (1) selon l'une des revendications précédentes, **caractérisé en ce que** celui-ci présente au moins un capuchon d'extrémité (15) pour fermer une face frontale du profilé (2).

13. Système de profilés (1) selon l'une des revendications précédentes, **caractérisé en ce que** celui-ci présente un élément de lèvre d'étanchéité (21) allongé, qui est réalisé de telle manière que, dans l'état disposé conformément à l'utilisation prévue, il peut être disposé dans une fente entre le profilé (2) et un habillage en panneaux latéralement adjacent au profilé (2) pour rendre la fente étanche, l'élément de lèvre d'étanchéité (21) présentant en particulier au moins d'un côté une bande adhésive (24) pour la fixation de l'élément de lèvre d'étanchéité (21) sur une sous-couche.
